(19) **Europäisches Patentamt**
**European Patent Office**
**Office européen des brevets**

(11) **EP 3 514 520 A1**

(12) # EUROPÄISCHE PATENTANMELDUNG

(43) Veröffentlichungstag:
**24.07.2019   Patentblatt 2019/30**

(51) Int Cl.:
**G01N 21/31** (2006.01)     **G01N 21/3554** (2014.01)
**G01N 21/359** (2014.01)

(21) Anmeldenummer: **19153008.8**

(22) Anmeldetag: **22.01.2019**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **22.01.2018   DE 102018101281**
                **11.06.2018   DE 102018113841**

(71) Anmelder: **Bayerisches Zentrum für Angewandte Energieforschung e. V.**
**97074 Würzburg (DE)**

(72) Erfinder:
• **HEPP, Johannes**
  **90489 Nürnberg (DE)**
• **VETTER, Andreas**
  **81379 München (DE)**
• **EGELHAAF, Hans-Joachim**
  **90403 Nürnberg (DE)**
• **BRABEC, Christoph J.**
  **4040 Linz (AT)**

(74) Vertreter: **Dr. Gassner & Partner mbB**
**Wetterkreuz 3**
**91058 Erlangen (DE)**

(54) **AUF NAHINFRAROTSPEKTROSKOPIE BERUHENDES BILDGEBENDES VERFAHREN ZUR FLÜSSIGKEITSDETEKTION**

(57)     Die Erfindung betrifft ein bildgebendes Verfahren mittels Nahinfrarotspektroskopie zur Flüssigkeitsdetektion in einer Verkapselungsprobe (2, 10), mit den folgenden Schritten: Anordnen eines Strahlers in einem Strahlengang, wobei der Strahler als Breitbandstrahler oder als LED oder als Laserstrahler ausgebildet ist, wobei in dem Fall, wenn ein Breitbandstrahler als Strahler verwendet wird, ein erster Bandpassfilter (6), der nur für Wellenlängen im Bereich der spektralen Absorption der Flüssigkeit der Probe durchlässig ist, in dem Strahlengang angeordnet wird; Durchleuchten oder Bestrahlen der Probe mittels des Strahlers (1) mit Nahinfrarotstrahlung und Erstellen einer ersten Bildaufnahme mittels einer Kamera (7); Erstellen einer zweiten Bildaufnahme ohne die Probe; gegebenenfalls Entfernen des ersten Bandpassfilters (6); wobei in dem Fall, wenn ein Breitbandstrahler als Strahler verwendet wird, ein zweiter Bandpassfilter (8), der nur für Wellenlängen außerhalb des Bereichs der spektralen Absorption der Flüssigkeit der Probe durchlässig ist, in dem Strahlengang angeordnet wird; Durchleuchten oder Bestrahlen der Probe mit Nahinfrarotstrahlung und Erstellen einer dritten Bildaufnahme mittels der Kamera (7); Erstellen einer vierten Bildaufnahme ohne die Probe; pixelweises numerisches Verknüpfen der Bildaufnahmen durch die folgende Beziehung:

$$IM = \frac{\lg(1.\ Bildaufnahme\ /\ 2.\ Bildaufnahme)}{\lg(3.\ Bildaufnahme\ /\ 4.\ Bildaufnahme)},$$

wobei IM eine Bilddarstellung der qualitativen Verteilung der in der Probe enthaltenen Flüssigkeit darstellt.

Fig. 1

**Beschreibung**

Die Erfindung betrifft ein bildgebendes Verfahren mittels Nahinfrarotspektroskopie zur Flüssigkeitsdetektion in einer Probe.

Bei bestimmten Anwendungen ist es erforderlich, die Diffusion und das Vorhandensein von Flüssigkeiten, insbesondere von Wasser, in einer Probe zu ermitteln. Dabei kann es sich um eine verkapselte, eingeschlossene Probe oder um eine unverkapselte Probe handeln. Ein derartiges bildgebendes Verfahren ist zweckmäßig für alle Materialien und Materialsysteme, die mit Wasser reagieren. Beispiele dafür sind organische Elektronikbauteile wie organische Leuchtdioden (OLED) und organische Solarzellen (OPV).

Bisher wurde zur Bestimmung der Wassereindringung hauptsächlich auf den sogenannten optischen und elektrischen Calciumtest zurückgegriffen. Allerdings wird dadurch lediglich ein "digitales" Ergebnis erhalten, nämlich, ob Wasser vorhanden oder nicht vorhanden ist. Die zu untersuchenden Proben müssen für den Calciumtest zunächst präpariert werden. Zur Durchführung des elektrischen Calciumtests muss zunächst eine elektrische Kontaktierung angebracht werden. Es wird auch als nachteilig angesehen, dass es sich um ein zerstörendes Prüfverfahren handelt. Beim Calciumtest wird entweder eine Transmissions- oder eine Leitfähigkeitsmessung durchgeführt.

Der Erfindung liegt die Aufgabe zu Grunde, ein alternatives Verfahren zur Flüssigkeitsdetektion in einer beliebigen Probe anzugeben, das ohne Zerstörung der Probe durchführbar ist.

Zur Lösung dieser Aufgabe ist ein Verfahren mit den Merkmalen des Patentanspruchs 1 vorgesehen. Weiterbildungen der Erfindung ergeben sich aus den abhängigen Patentansprüchen.

Erfindungsgemäß ist ein bildgebendes Verfahren mittels Nahinfrarotspektroskopie zur Flüssigkeitsdetektion in einer Probe vorgesehen, das die folgenden Schritte umfasst:

- Anordnen eines Strahlers in einem Strahlengang, wobei der Strahler als Breitbandstrahler oder als LED oder als Laserstrahler ausgebildet ist,
- wobei in dem Fall, wenn ein Breitbandstrahler als Strahler verwendet wird, ein erster Bandpassfilter, der nur für Wellenlängen im Bereich der spektralen Absorption der Flüssigkeit der Probe durchlässig ist, in dem Strahlengang angeordnet wird;
- Durchleuchten oder Bestrahlen der Probe mittels des Strahlers mit Nahinfrarotstrahlung und Erstellen einer ersten Bildaufnahme mittels einer Kamera;
- Erstellen einer zweiten Bildaufnahme ohne die Probe;
- gegebenenfalls Entfernen des ersten Bandpassfilters;
- wobei in dem Fall, wenn ein Breitbandstrahler als Strahler verwendet wird, ein zweiter Bandpassfilter, der nur für Wellenlängen außerhalb des Bereichs der spektralen Absorption der Flüssigkeit der Probe durchlässig ist in dem Strahlengang angeordnet wird;
- Durchleuchten oder Bestrahlen der Probe mit Nahinfrarotstrahlung und Erstellen einer dritten Bildaufnahme mittels der Kamera;
- Erstellen einer vierten Bildaufnahme ohne die Probe;
- pixelweises numerisches Verknüpfen der Bildaufnahmen durch die folgende Beziehung:

$$IM = \frac{\lg(1.\ Bildaufnahme\ /\ 2.\ Bildaufnahme)}{\lg(3.\ Bildaufnahme\ /\ 4.\ Bildaufnahme)},$$

wobei IM eine Bilddarstellung der qualitativen Verteilung der in der Probe enthaltenen Flüssigkeit darstellt.

Mit "lg" ist der dekadische Logarithmus bezeichnet, d. h. der Logarithmus zur Basis 10.

Das erfindungsgemäße Verfahren nutzt die Absorptionsbande der zu detektierenden Flüssigkeit, um über die Abnahme der Transmission der Probe das Vorhandensein der Flüssigkeit zu detektieren. Dazu wird die Probe von einer Seite mittels eines Strahlers mit Nahinfrarotstrahlung durchleuchtet. Der erste Bandpassfilter, der sich im Strahlengang befindet, kann entweder vor der Kamera angeordnet oder in die Kamera eingesetzt werden. Der erste Bandpassfilter beschneidet das Spektrum des Strahlers so, dass die Kamera nur Wellenlängen im Bereich der Flüssigkeitsabsorption aufnimmt. Dementsprechend muss der erste Bandpassfilter an die jeweilige zu detektierende Flüssigkeit angepasst sein.

Gemäß einer bevorzugten Variante des erfindungsgemäßen Verfahrens wird zusätzlich eine Initialmessung durchgeführt wird, bei der die folgenden Bildaufnahmen erstellt werden: eine fünfte Bildaufnahme mit in dem Strahlengang angeordneter Probe, analog zur ersten Bildaufnahme, wobei in dem Fall, wenn ein Breitbandstrahler als Strahler verwendet wird, der erste Bandpassfilter, der nur für Wellenlängen im Bereich der spektralen Absorption der Flüssigkeit der Probe durchlässig ist, in dem Strahlengang angeordnet wird; eine sechste Bildaufnahme ohne Probe, gegebenenfalls mit dem ersten Bandpassfilter, analog zur zweiten Bildaufnahme; eine siebte Bildaufnahme mit dem zweiten Bandpassfilter und in dem Strahlengang angeordneter Probe, analog zur dritten Bildaufnahme; eine achte Bildaufnahme mit dem zweiten Bandpassfilter ohne Probe, analog zur vierten Bildaufnahme; anschließend werden die 1. bis 8. Bildaufnahmen pixelweise durch die folgende Beziehung numerisch miteinander verknüpft:

$$IM_x = \frac{\lg(5.\ Bildaufnahme\ /\ 6.\ Bildaufnahme)}{\lg(7.\ Bildaufnahme\ /\ 8.\ Bildaufnahme)} - \frac{\lg(1.\ Bildaufnahme\ /\ 2.\ Bildaufnahme)}{\lg(3.\ Bildaufnahme\ /\ 4.\ Bildaufnahme)}$$

wobei $IM_x$ eine Bilddarstellung der Menge der in der Probe enthaltenen Flüssigkeit pro Flächeneinheit ist. Die Initialmessung umfasst die 1. bis 4. Bildaufnahmen, die 5. bis 8. werden zu einem späteren Zeitpunkt aufgenommen. Durch Differenzbildung der beiden Bilddarstellungen ist eine quantitative Bestimmung der in der Probe enthaltenen Flüssigkeit möglich.

Vor jeder Bildaufnahme wird jeweils ein Dunkelbild, d. h. eine Bildaufnahme ohne Beleuchtung, erstellt und von der anschließend erstellten Bildaufnahme rechnerisch abgezogen. Das Ein- und Ausschalten des Strahlers zur Erstellung des Dunkelbilds kann entweder elektrisch oder durch eine mechanische Unterbrechung des Lichtstrahls realisiert werden. Das Berücksichtigen des Dunkelbilds ist besonders wichtig bei einer Kamera mit einem hohen Dunkelstrom (Signaloffset).

Der bei dem erfindungsgemäßen Verfahren verwendete Strahler kann als Breitbandstrahler oder als LED oder als Laserstrahler ausgebildet sein. Nur wenn ein Breitbandstrahler verwendet wird, wird der erste Bandpassfilter verwendet. Wenn eine LED oder ein Laserstrahler als Strahler eingesetzt wird, erübrigt sich aufgrund des schmalen ausgesendeten Wellenlängenbereichs der erste Bandpassfilter. Der von der LED oder dem Laserstrahler emittierte Wellenlängenbereich muss an den Bereich der Flüssigkeitsabsorption der jeweiligen zu detektierenden Flüssigkeit angepasst sein.

Anschließend wird die Probe aus dem Strahlengang entfernt und eine zweite Bildaufnahme erstellt. Ein gegebenenfalls vorhandener Bandpassfilter verbleibt dabei im Strahlengang.

Danach wird der gegebenenfalls verwendete erste Bandpassfilter entfernt und es wird ein zweiter Bandpassfilter in den Strahlengang eingesetzt, der nur für Wellenlängen außerhalb des Bereichs der spektralen Absorption der Flüssigkeit der Probe durchlässig ist. Die Probe wird mit Nahinfrarotstrahlung durchleuchtet oder bestahlt, um mittels der Kamera eine dritte Bildaufnahme zu erstellen. Dieses Bild dient als Referenzbild, um äußere Einflüsse wie z. B. Einflüsse eines inhomogen absorbierenden Verkapselungsmaterials zu kompensieren. Wesentlich ist dabei, dass die Wellenlänge des zweiten Bandpassfilters so gewählt wird, dass dieser nur solche Wellenlängen durchlässt, die von der zu detektierenden Flüssigkeit unbeeinflusst sind, d. h. der Durchlässigkeitsbereich des zweiten Bandpassfilters liegt außerhalb der Absorptionsbande der jeweiligen zu detektierenden Flüssigkeit.

Anschließend wird die Probe entfernt und es wird eine vierte Bildaufnahme erstellt. Auf diese Weise werden insgesamt vier Bildaufnahmen erhalten. Die erste Bildaufnahme ist eine Aufnahme der Probe, wobei in Abhängigkeit des Strahlers gegebenenfalls der erste Bandpassfilter eingesetzt wird. Die zweite Bildaufnahme wird ohne die Probe aufgenommen. Die dritte Bildaufnahme wird bei eingesetzten zweiten Bandpassfilter mit der Probe aufgenommen. Die vierte Bildaufnahme wird bei eingesetztem zweiten Bandpassfilter ohne Probe aufgenommen.

Die vier Bildaufnahmen werden numerisch pixelweise durch die folgende Beziehung miteinander verknüpft:

$$IM = \frac{\lg(1.\ Bildaufnahme\ /\ 2.\ Bildaufnahme)}{\lg(3.\ Bildaufnahme\ /\ 4.\ Bildaufnahme)}.$$

Als Ergebnis erhält man eine Bilddarstellung der qualitativen Verteilung der in der Probe enthaltenen Flüssigkeit.

Durch das erfindungsgemäße bildgebende Verfahren kann eine bestimmte Probe in Zeitabständen wiederholt untersucht werden, um das Fortschreiten des Eindringens einer Flüssigkeit wie Wasser in die Probe zu verfolgen.

Die beschriebene Reihenfolge der Erstellung der ersten bis vierten Bildaufnahme kann beliebig geändert werden. Beispielsweise könnte zunächst der zweite Bandpassfilter eingesetzt und eine Aufnahme ohne die Verkapselungsprobe (vierte Bildaufnahme) und anschließend eine Aufnahme (dritte Bildaufnahme) mit der Verkapselungsprobe erstellt werden. Danach kann der zweite Bandpassfilter entfernt und der erste Bandpassfilter in den Strahlengang eingesetzt werden, um die erste und die zweite Bildaufnahme zu erstellen. Die Reihenfolge, in der die erste bis vierten Bildaufnahmen aufgenommen werden, ist somit beliebig.

Das erfindungsgemäße Verfahren eignet sich besonders gut, um Flüssigkeiten wie Wasser oder ein organisches Lösungsmittel in Filmen oder in verkapseltem Material zu detektieren. Ebenso können Lösungen detektiert werden. In Abhängigkeit der zu detektierenden Flüssigkeit werden die beiden Bandpassfilter passend ausgewählt. Der erste Bandpassfilter wird so gewählt, dass er für Wellenlängen im Bereich der Absorption der zu detektierenden Flüssigkeit durchlässig ist. Die beiden Bandpassfilter sind nur bei einem Breitbandstrahler erforderlich. Bei einer LED oder einem Laserstrahler entfallen die beiden Bandpassfilter. Der zweite Bandpassfilter wird so gewählt, dass er für Wellenlängen durchlässig ist, die außerhalb der Absorptionsbande der zu detektierenden Flüssigkeit liegen.

Vorzugsweise wird bei dem erfindungsgemäßen Verfahren zur Detektion von Wasser ein erster Bandpassfilter verwendet, der für Wellenlängen um etwa 2.950 nm oder um etwa 1.900 nm oder um etwa 1.450 nm durchlässig ist. Diese Wellenlängen entsprechen der Wasserabsorption. Alternativ zu dem Bandpassfilter wird eine LED oder ein Laserstrahler verwendet, die bzw. der Strahlung in dem angegebenen Wellenlängenbereich emittiert.

Vorzugsweise wird bei dem erfindungsgemäßen Verfahren zur Detektion von Wasser ein zweiter Bandpassfilter verwendet, der für Wellenlängen um etwa 2.400 nm durchlässig ist. In diesem Wellenlängenbereich findet keine Absorption durch Wasser statt.

Gemäß einer Weiterbildung des Verfahrens kann es vorgesehen sein, dass der Strahler und die Kamera auf unterschiedlichen Seiten der Probe angeordnet sind und die Probe durchleuchtet wird. Diese Vorgehensweise bietet sich insbesondere bei NIR-semitransparenten Proben oder Verkapselungsproben an.

Alternativ kann es bei dem erfindungsgemäßen Verfahren vorgesehen sein, dass der Strahler und die Kamera auf derselben Seite der Probe schräg zur Oberfläche der Probe angeordnet werden, derart, dass von der Probe reflektierte Strahlung von der Kamera erfasst wird.

Diese Vorgehensweise bietet sich bei Proben an, die aus einem Material bestehen, dessen Rückseite Nahinfrarotstrahlung im Wesentlichen reflektiert. Ein Beispiel dafür ist die Untersuchung von Photovoltaikmodulen.

Durch die schräge Anordnung der Kamera ergibt sich eine Verzerrung der Bildaufnahmen. Diese kann anschließend durch ein Bildverarbeitungsverfahren korrigiert werden. Ebenso kann die chromatische Aberration mittels Bildverarbeitung korrigiert werden.

Die Erfindung wird nachfolgend anhand von Ausführungsbeispielen unter Bezugnahme auf die Zeichnungen erläutert. Die Zeichnungen sind schematische Darstellungen und zeigen:

Fig. 1      eine Anordnung zur Durchführung des erfindungsgemäßen bildgebenden Verfahrens während der Erstellung der ersten Bildaufnahme,

Fig. 2      eine Anordnung bei der Erstellung der zweiten Bildaufnahme,

Fig. 3      eine Anordnung bei der Erstellung der dritten Bildaufnahme,

Fig. 4      eine Anordnung bei der Erstellung der vierten Bildaufnahme,

Fig. 5      eine Anordnung, bei der Strahler und Kamera auf derselben Seite der Probe angeordnet sind,

Fig. 6      die zeitliche Änderung der Konzentration der Flüssigkeit in der Probe,

Fig. 7      eine Variante der in Fig. 5 gezeigten Anordnung,

Fig. 8      den Aufbau einer Probe, das Transmissionsspektrum der Einkapselung und das Absorptionsspektrum von Wasser,

Fig. 9      die zeitliche Entwicklung der Spektren der optischen Dichte der Probe,

Fig. 10      eine vereinfachte Darstellung des Versuchsaufbaus,

Fig. 11      Transmissionspektren der optischen Komponenten des auf IR-Absorption beruhenden Versuchsaufbaus, Spektrum der IR-Quelle, and Spektren der resultierenden Strahlungsintensitäten,

Fig. 12      die Abschätzung der Detektionsgrenze,

Fig. 13      IR-Absorptionsbilder im Vergleich zu FEM-Simulationen,

Fig. 14      ein quantitativer Vergleich von Messung und Simulation, und

Fig. 15      die Oxidation einer Probe beim Ca-Test.

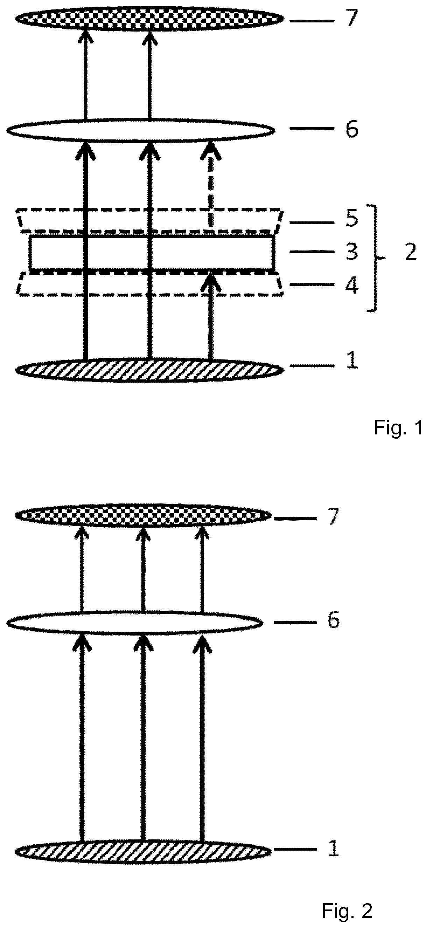

Die in Fig. 1 gezeigte Anordnung eignet sich für das bildgebende Verfahren mittels Nahinfrarotspektroskopie zur Flüssigkeitsdetektion in einer als Verkapselungsprobe ausgebildeten Probe. Die Anordnung umfasst einen Strahler 1, der als grauer Körper betrachtet werden kann. Der Strahler 1 ist als Breitbandstrahler ausgebildet und emittiert Nahinfrarotstrahlung. Im Strahlengang befindet sich eine Verkapselungsprobe 2, bestehend aus einem zu untersuchenden Probenkörper 3 und Deckschichten 4, 5, die den Probenkörper 3 wie eine Verpackung oder eine Schutzschicht umgeben. Bei dem Probenkörper 3 kann es sich beispielsweise um Lebensmittel, aber auch um eine organische Solarzelle handeln. Die Deckschichten 4, 5 bestehen in dem dargestellten Ausführungsbeispiel aus transparenten Glasscheiben. Die Deckschichten 4, 5 verkapseln den Probenkörper 3. Mittels des bildgebenden Verfahrens wird detektiert, ob der Probenkörper 3 Wasser enthält.

Optional kann im Strahlengang zwischen dem Strahler und dem Probenkörper ein innen verspiegeltes Rohr (nicht gezeigt) zum Homogenisieren der Strahlung angeordnet sein.

Die in Fig. 1 gezeigte Anordnung umfasst im Strahlengang hinter dem Probenkörper 3 einen ersten Bandpassfilter 6, der für den Wellenlängenbereich 1.900 nm ± 112 nm durchlässig ist. Dieser Wellenlängenbereich ist an die Absorptionsbande von Wasser angepasst, die bei 1.920 nm liegt. Die Deckschichten 4, 5 sind hingegen in einem Wellenlängenbereich von 400 nm bis 2.600 nm durchlässig. Diese Wellenlängenbereiche sind lediglich als Beispiel zu verstehen und können sich in Abhängigkeit des Materials der Deckschichten ändern.

In Strahlungsrichtung gesehen hinter dem ersten Bandpassfilter 6 ist eine Kamera 7 angeordnet, die als IR-Kamera ausgebildet ist und einen Detektionsbereich von 1.000 nm bis 5.000 nm besitzt.

Mit der in Fig. 1 gezeigten Anordnung wird die Verkapselungsprobe 2 durchleuchtet und es wird eine erste Bildaufnahme mit der Kamera 7 erstellt.

Fig. 2 zeigt eine modifizierte Anordnung, bestehend aus dem Strahler 1, dem ersten Bandpassfilter 6 und der Kamera 7. Im Vergleich zu der in Fig. 1 gezeigten Anordnung wurde die Verkapselungsprobe 2 entfernt. In dieser Konfiguration wird eine zweite Bildaufnahme aufgenommen.

Der in den Fig. 1 und 2 gezeigte erste Bandpassfilter 6 bewirkt, dass lediglich der Anteil der von dem Strahler 1 abgegebenen Nahinfrarotstrahlung durchgelassen wird, der im Bereich von 1.900 nm liegt. Sofern der Probenkörper 3 Wasser enthält, wird Strahlung der Wellenlänge 1.900 nm von dem Wasser absorbiert.

Durch Vergleichen der ersten Bildaufnahme und der zweiten Bildaufnahme kann festgestellt werden, ob in dem Probenkörper 3 Wasser enthalten ist. In diesem Fall nimmt die Transmission ab, wodurch sich ein optisch sichtbarer Unterschied zwischen der ersten und der zweiten Bildaufnahme ergibt.

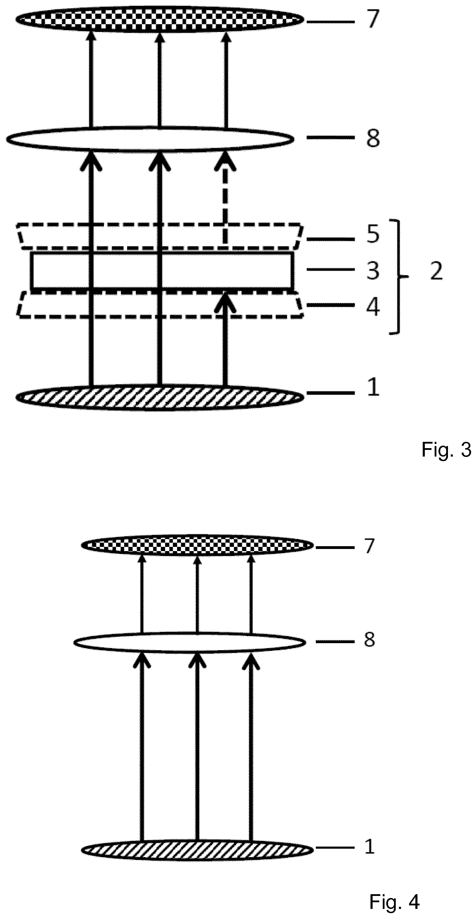

Fig. 3 ist eine ähnliche Anordnung wie Fig. 1, umfassend den Strahler 1, die Verkapselungsprobe 2, und die Kamera 7. Abweichend von der in Fig. 1 gezeigten Anordnung ist bei der Anordnung von Fig. 3 ein zweiter Bandpassfilter 8 vorhanden, der zwischen der Verkapselungsprobe 2 und der Kamera 7 angeordnet ist. Der zweite Bandpassfilter 8 ist durchlässig für einen Wellenlängenbereich von 2.418 nm ± 70 nm. Der zweite Bandpassfilter 8 wird so gewählt, dass er für einen Wellenlängenbereich durchlässig ist, der außerhalb der Wasserabsorptionsbande liegt. Dementsprechend kann anstelle des zweiten Bandpassfilters 8 auch ein anderer Bandpassfilter verwendet werden, solange dessen Wellenlängenbereich außerhalb der Wasserabsorptionsbande liegt. Mit der in Fig. 3 gezeigten Anordnung wird eine dritte Bildaufnahme mittels der Kamera 7 erstellt.

Fig. 4 zeigt die Anordnung, von Fig. 3, nachdem die Verkapselungsprobe 2 entfernt wurde. Somit umfasst die Anordnung den Strahler 1, den zweiten Bandpassfilter 8 und die Kamera 7. Mittels dieser Anordnung wird eine vierte Bildaufnahme erfasst. Die dritte und die vierte Bildaufnahme werden aufgenommen, um äußere Einflüsse wie z. B. Einflüsse eines inhomogen absorbierenden Verkapselungsmaterials zu kompensieren. Die dritte Bildaufnahme dient somit als Referenzbild. Die zweite und die vierte Bildaufnahme liefern Bilder des Strahlungsprofils, um Inhomogenitäten des Strahlungsprofils zu kompensieren. Um eine spätere Überlagerung der Bildaufnahmen zu ermöglichen, ist es notwendig, dass der erste Bandpassfilter 6 und der zweite Bandpassfilter 8 den optischen Strahlengang auf die gleiche Weise beeinflussen.

Die Aufnahmen mit einer LED oder einem Laser als Lichtquelle werden bei der gleichen Wellenlänge durchgeführt wie in dem Fall des Breitbandstrahlers in Kombination mit dem Filter, da es dem gleichen Zweck dient. Die wesentliche Bedingung bei der dritten und der vierten Aufnahme ist, dass die Wellenlänge außerhalb der Absorptionsbereiche von Wasser liegt. Da sowohl LED als auch Leser einen spektral eingegrenzten Wellenlängenbereich ausstrahlen, ist in diesem Fall kein weiterer Filter nötig. Um größere Flächen zu bestrahlen, wird beim Leser eine entsprechende Aufweitungsoptik eingesetzt.

Nachdem alle vier Bildaufnahmen erstellt worden sind, werden diese durch die folgende Beziehung pixelweise numerisch verknüpft:

$$IM = \frac{\lg(1.\ Bildaufnahme\ /\ 2.\ Bildaufnahme)}{\lg(3.\ Bildaufnahme\ /\ 4.\ Bildaufnahme)},$$

wobei IM eine Bilddarstellung der qualitativen Verteilung der in der Probe enthaltenen Flüssigkeit darstellt.

Alternativ zu der beschriebenen Detektion von Wasser kann auch das Vorhandensein anderer Flüssigkeiten detektiert werden. Beispiele dafür sind organische Lösungsmittel. In jedem Fall muss dann der erste Bandpassfilter so gewählt werden, dass dieser durchlässig für ein Absorptionsband der zu untersuchenden Flüssigkeit ist. Der zweite Bandpassfilter muss so gewählt werden, dass er außerhalb der Absorptionsbande der zu untersuchenden Flüssigkeit liegt. Bestimmte Flüssigkeiten besitzen mehrere Absorptionsbanden. Beispielsweise absorbiert Wasser auch Wellenlängen im Bereich von etwa 1.400 nm. Dementsprechend könnte anstelle des ersten Bandpassfilters 6, der für den Wellenlängenbereich 1.900 nm ± 112 nm durchlässig ist, alternativ auch ein Bandpassfilter verwendet werden, der für den Wellenlängenbereich um 1.400 nm durchlässig ist. Durch geeignete Wahl der Wellenlängenbereiche können Probleme durch die Transparenz von Verkapselungsmaterialien vermieden werden, die ansonsten z. B. bei Glas auftreten können.

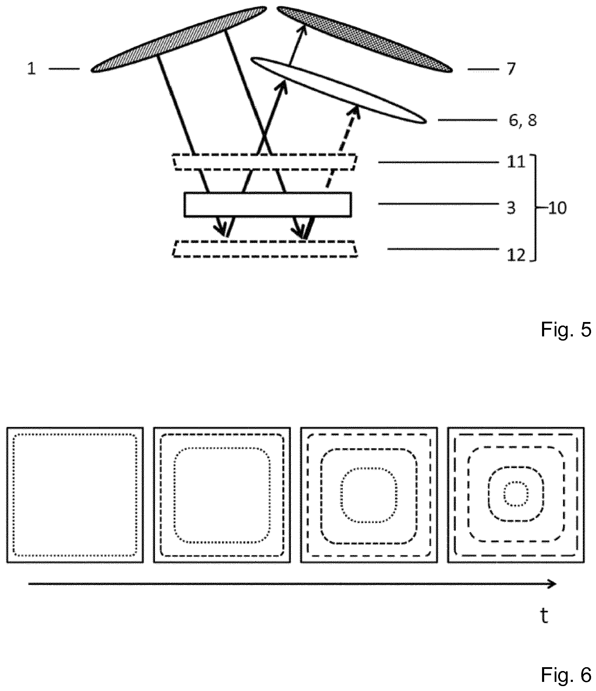

Fig. 5 ist eine schematische Darstellung und zeigt eine Variante des bildgebenden Verfahrens, bei dem der Strahler und die Kamera auf derselben Seite der Verkapselungsprobe angeordnet sind. Die dafür verwendete Anordnung umfasst den Strahler 1, der schräg zur Oberfläche einer Verkapselungsprobe 10 angeordnet ist. Dementsprechend muss auch die Kamera 7 spiegelbildlich dazu schräg angeordnet werden, sodass von dem Strahler 1 emittierte Strahlung von der Verkapselungsprobe 10 reflektiert und von der Kamera 7 erfasst werden kann.

Der Verkapselungsprobe 10 besteht aus einer oberen Schicht 11, die für Nahinfrarotstrahlung transparent ist. Vom Strahler 1 aus gesehen auf der Rückseite der Verkapselungsprobe 10 befindet sich eine Schicht 12, die Nahinfrarotstrahlung im Wesentlichen reflektiert.

Durch den schrägen Aufnahmewinkel der Kamera 7 ergeben sich Verzerrungen der Bildaufnahmen, die durch ein Bildverarbeitungsverfahren korrigiert werden.

Nachfolgend wird ein weiteres Ausführungsbeispiel des bildgebenden Verfahrens beschrieben. Bei dieser Variante wird zusätzlich eine Initialmessung durchgeführt, bei der die folgenden Bildaufnahmen erstellt werden: eine fünfte Bildaufnahme mit in dem Strahlengang angeordneter Probe, analog zur ersten Bildaufnahme, wobei in dem Fall, wenn ein Breitbandstrahler als Strahler verwendet wird, der erste Bandpassfilter, der nur für Wellenlängen im Bereich der spektralen Absorption der Flüssigkeit der Probe durchlässig ist, in dem Strahlengang angeordnet wird; eine sechste Bildaufnahme ohne Probe, gegebenenfalls mit dem ersten Bandpassfilter, analog zur zweiten Bildaufnahme; eine siebte Bildaufnahme mit dem zweiten Bandpassfilter und in dem Strahlengang angeordneter Probe, analog zur dritten Bildaufnahme; eine achte Bildaufnahme mit dem zweiten Bandpassfilter ohne Probe, analog zur vierten Bildaufnahme. Anschließend werden die 1. bis 8. Bildaufnahmen pixelweise numerisch durch die folgende Beziehung miteinander verknüpft:

$$IM_x = \frac{\lg(5.\ Bildaufnahme\ /\ 6.\ Bildaufnahme)}{\lg(7.\ Bildaufnahme\ /\ 8.\ Bildaufnahme)} - \frac{\lg(1.\ Bildaufnahme\ /\ 2.\ Bildaufnahme)}{\lg(3.\ Bildaufnahme\ /\ 4.\ Bildaufnahme)}$$

wobei $IM_x$ eine Bilddarstellung der Menge der in der Probe enthaltenen Flüssigkeit pro Flächeneinheit unter Berücksichtigung der Initialmessung ist. Die Initialmessung umfasst die 1. bis 4. Bildaufnahme. Anschließend wird zu einem späteren Zeitpunkt t=x eine weitere Messung mit den Bildaufnahmen 5 bis 8 durchgeführt.

Durch Differenzbildung der beiden Aufnahmen ist eine quantitative Auswertung möglich, während das zuvor beschriebene Verfahren eine qualitative Auswertung ermöglicht. Durch die zusätzliche Berücksichtigung der Initialmessung können weitere Informationen erhalten oder abgeleitet werden. Beispielsweise kann der Diffusionskoeffizient bestimmt werden.

Nachfolgend wird ein weiteres Ausführungsbeispiel des bildgebenden Verfahrens beschrieben, bei dem eine LED als Strahler verwendet wird. Eine LED emittiert Licht eines schmalen Wellenlängenbereichs, der an den Bereich der Flüssigkeitsabsorption der jeweiligen zu detektierenden Flüssigkeit angepasst ist. Zur Detektion von Wasser eignet sich u. a. eine LED, die Licht mit einer Wellenlänge von etwa 1.450 nm emittiert. Anders als in beiden vorhergehenden Ausführungsbeispielen wird kein erster Bandpassfilter benötigt. Nachdem alle vier Bildaufnahmen erstellt sind, wird durch pixelweises numerisches Verknüpfen der Bildaufnahmen gemäß der Beziehung

$$IM = \frac{\lg(1.\ Bildaufnahme\ /\ 2.\ Bildaufnahme)}{\lg(3.\ Bildaufnahme\ /\ 4.\ Bildaufnahme)}$$

die Bilddarstellung erzeugt.

Die Menge der in der Probe enthaltenen Flüssigkeit kann unterschiedlich optisch dargestellt werden, beispielsweise durch verschiedene Farben, Graustufen oder durch Linien, die Bereiche gleicher Flüssigkeitsmenge (Intensität) angeben.

Fig. 6 zeigt beispielhaft den zeitlichen Verlauf der Flüssigkeitsinfiltration in einer Probe. In Fig. 6 sind vier Bildaufnahmen gezeigt, die mittels des beschriebenen Verfahrens zeitlich nacheinander erstellt wurden. Unterhalb der Bildaufnahme ist die Zeitachse dargestellt. Die in der linken Bildaufnahme durch eine punktierte Linie dargestellte Konzentration ist kleiner als die in der benachbarten, zweiten Bildaufnahme durch eine gestrichelte Linie dargestellte Konzentration. In Fig. 6 erkennt man, dass die Konzentration der Flüssigkeit in der Probe im Zeitablauf vom Rand her zunimmt. Anhand der zeitlichen Veränderung kann der Diffusionskoeffizient bestimmt werden.

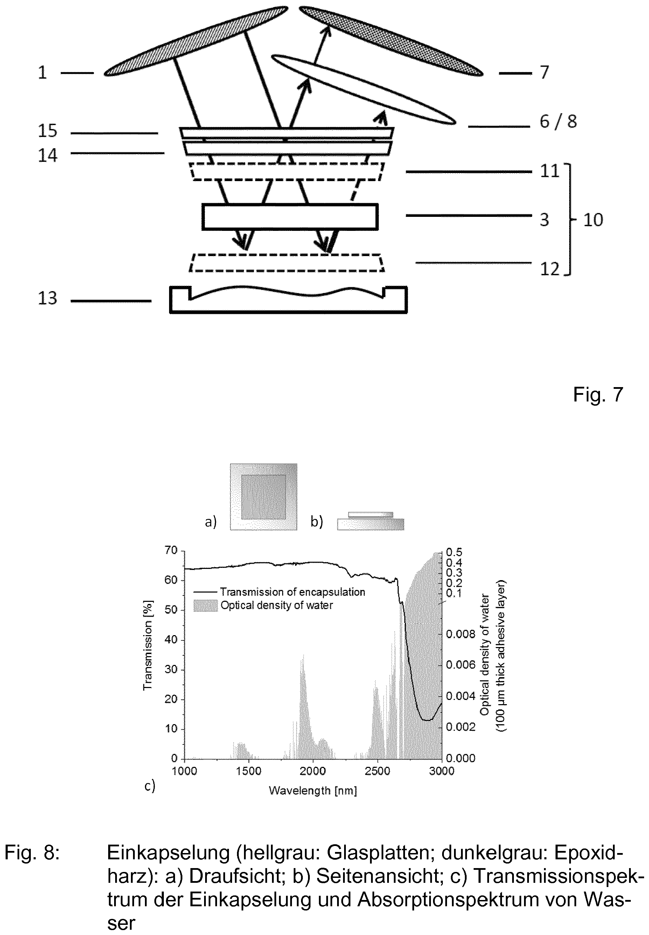

Fig. 7 zeigt eine Variante der in Fig. 5 gezeigten Anordnung, bei der die Messung in Reflexion erfolgt. Bei der Anordnung von Fig. 7 ist zusätzlich ein Flüssigkeitsreservoir 13 vorhanden, sowie eine hygroskopische Schicht 14 und eine Schutzschicht 15, die vor Flüssigkeiten von einer zweiten Seite schützt. Die zusätzlichen Komponenten dienen der Signalverstärkung. Sie werden bevorzugt bei besonders dichten Barrieren eingesetzt, um eine erhöhte Signaländerung zu generieren.

Mittels der zusätzlichen hygroskopischen Schicht 15 wird die Sensitivität des Verfahrens erhöht. Die hygroskopische Schicht 14 ist - wie in Fig. 7 gezeigt ist - auf einer Seite des Schichtsystems aufgebracht, während die andere Seite der zu messenden Flüssigkeit ausgesetzt ist. Nachdem die Flüssigkeit die zu untersuchende Schicht durchdringt, wird sie durch die hygroskopische Schicht 14 aufgenommen, wodurch der Konzentrationsgradient immer den Maximalwert beibehält. Auf diese Weise können die Messungen beschleunigt werden.

Durch eine Zeilenlichtquelle, eine Zeilenkamera oder mit einer Raytracing-Software können unerwünschte Reflexionen, zum Beispiel an der Oberfläche der ersten Deckschicht, geometrisch herausgefiltert werden.

Das erfindungsgemäße bildgebende Verfahren, bei dem durch Absorption von Infrarotstrahlung Wasser, das in eine Verkapselung elektronischer oder optoelektronischer Bauteile eingedrungen ist, detektiert werden kann, wird nachfolgend im Detail erläutert.

Das Eindringen von Wasser in die Verkapselung elektronischer Bauteile ist ein ernsthaftes Problem, insbesondere für organische Elektronikbauteile oder für auf Perowskit basierenden elektronischen Bauteilen. Für die Entwicklung geeigneter Barrierematerialien ist ein zuverlässiges, schnelles und zerstörungsfreies Analyseverfahren erforderlich. Es wird daher eine Anordnung zur Bildgebung vorgeschlagen, die auf ausgewählten Infrarotstrahlungsquellen beruht und eine Kamera umfasst, die für einen mittleren Infrarotbereich empfindlich ist, wobei von dem Absorptionsband von Wasser bei etwa 1.920 nm als Referenzband Gebrauch gemacht wird. Auf diese Weise ist es möglich, die Verteilung der Wasserkonzentration und deren zeitliche Änderung im Inneren der Verkapselung oder der Verpackung von Bauteilen zu überwachen. Die Messung ist in der Lage, das lokale Vorhandensein von Wasser bis in den Bereich $mg/m^2$ bei einer großen Anzahl verschiedener Verkapselungsmaterialien zu detektieren.

Der gegenwärtige Trend der Erhöhung des globalen Energieverbrauchs führt zu dem Schluss, dass stärkere Anstrengungen erforderlich sind, um erneuerbare Energiequellen zu fördern und zu etablieren. Große Hoffnung setzt man derzeit in Photovoltaik der dritten Generation wie organische Solarzellen oder Perowskit-Solarzellen, die gedruckt werden können und die somit das Potenzial bieten, zu geringen Kosten herstellbar zu sein. Neben den Kosten und dem Wirkungsgrad der Solarmodule ist die Lebensdauer eine dritte wichtige Anforderung, die weiter zu optimieren ist. Selbst die inhärenten vorteilhaften Qualitäten gedruckter Solarzellen wie eine kurze Amortisierungszeit, Halbdurchlässigkeit und Flexibilität können die mangelnde Lebensdauer nicht vollständig kompensieren.

Allerdings reagieren organische und auf Perowskit basierende optische und optoelektronische Bauteile wesentlich empfindlicher auf Feuchtigkeit in der umgebenden Atmosphäre als anorganische elektronische Bauteile. Lediglich etwa 20 $mg/m^2$ Wasser reichen aus, um den Wirkungsgrad von organischen Solarzellen zu halbieren. Dieser hohe Verlust wird durch die Interaktion von Wasser mit hygroskopischen Materialien in dem Bauteil verursacht, wie PEDOT:PSS. Die Verbesserung der Verkapselungsmaterialien und des Aufbaus der Verkapselung ist daher unverzichtbar, um Degradation zu reduzieren und somit die Lebensdauer der Bauteile auf ein erforderliches Maß zu erhöhen. Abgesehen von der richtigen Wahl der Barrierematerialien muss ein geeigneter Kleber für die Laminierung gefunden werden, da Kleber relativ mäßige Barriereeigenschaften besitzen und somit das Eindringen von Wasser von Kanten der Verpackung oder Einkapselung her ermöglichen. Für die Entwicklung verbesserter Materialien und Verfahren zur Einkapselung als auch für die Qualitätskontrolle sind geeignete bildgebende Techniken zum Überwachen von eingedrungenem Wasser in Bauteilverkapselungen essenziell.

Der Calciumtest (Ca-Test) ist ein etabliertes Verfahren für die Feststellung von in eine Verkapselung eingedrungenem Wasser. Bei Anwesenheit von Wasser oxidiert Ca zu Calciumhydroxid ($Ca(OH)_2$). Bei dieser Reaktion verändert sich der Ca-Film von undurchsichtig zu transparent und von elektrisch leitend zu elektrisch isolierend. Durch Verwenden des optischen Ca-Tests ist es möglich, den Diffusionskoeffizienten durch optisches Messen des Abstands der Kante der Einkapselung in Richtung der Reaktionsfront zu messen. Der elektrische Calciumtest beruht auf der allmählich abnehmenden Leitfähigkeit. So oder so kann der Diffusionskoeffizient von Wasser in dem System festgestellt werden. Obwohl der Calciumtest sehr empfindlich auf Wasser reagiert, besitzt er eine Reihe von Nachteilen. Erstens kann die Calciumschicht lediglich bei Abwesenheit von Wasser oder Sauerstoff aufgebracht werden. Dadurch ist er schwierig handhabbar und erfordert einen Verdampfer innerhalb einer Handschuhbox. Ferner muss das Aufbringen vor dem Verkapseln des Bauteils erfolgen. Die wichtigste Einschränkung des Calciumtests ist die Tatsache, dass das Bauteil zerstört werden kann oder dass einige seiner Funktionen durch Aufbringen der Calciumschicht nutzlos werden. Zusätzlich ist die durch den Calciumtest erhaltene Information lediglich von binärer Natur (transparent/nicht-transparent), wohingegen das erfindungsgemäße Verfahren den genauen Gradienten der Wasserkonzentration zeigt.

Es wurde das erfindungsgemäße Verfahren entwickelt, das auf Infrarot-Bildgebung (IR) basiert, das eine kontinuierliche und zerstörungsfreie Überwachung der zeitlichen Entwicklung der lokalen Wasserkonzentration in verkapselten Bauteilen ermöglicht. Der Ansatz ist dabei, die fortschreitenden räumlichen Änderungen der IR-Absorption zu messen. Die Schwierigkeit liegt darin, dass selbst sehr kleine Wassermengen, die in der Verkapselung vorhanden sind, erfasst werden müssen, um die empfindliche Elektronik im Inneren wirksam zu schützen.

Höhere Konzentrationen von Feuchtigkeit in Holz oder Mörtel können bereits kommerziell durch IR-Thermographie bildlich dargestellt werden, wobei von dem Effekt Gebrauch gemacht wird, das Wasser die Wärmekapazität des Materials beeinflusst. Dieser Ansatz wurde angewendet, um die lokale Wasserkonzentration in Einkapselungen zu messen, jedoch stellte sich heraus, dass dieses Verfahren im Hinblick auf lokale Unterschiede der Materialeigenschaften (wie Dicke und Absorption) zu empfindlich war, sodass die Messgenauigkeit schlecht war. Daher wurde stattdessen das erfindungsgemäße Verfahren gewählt, bei dem die Verteilung von Wasser in einer Probe durch Messen von deren Infrarotabsorption erfasst wird.

Nachfolgend wird erläutert, dass das erfindungsgemäße, im Hinblick auf das Spektrum empfindliche Verfahren es ermöglicht, niedrige Wasserkonzentrationen bis 0,6 g/m$^2$ und potentiell bis in den mg/m$^2$-Bereich zu visualisieren. Die Gültigkeit dieses Verfahrens wird durch Vergleich der experimentellen Daten mit Simulationen nach der Methode der finiten Elemente (FEM) und mit dem Ca-Test bestätigt. Die Nützlichkeit dieses Ansatzes wird durch Bestimmen des Diffusionskoeffizienten von Wasser in einem Klebstoff demonstriert, der häufig für die Einkapselung organischer Elektronikbauteile benutzt wird.

Materialien und Verfahren

Die am häufigsten verwendete Art der Einkapselung eines Bauteils ist eine Laminierung zwischen Barrierematerialien. In Fig. 8a und 8b ist ein Barriere/Kleber/Barriere-System gezeigt, das als Modellsystem für die Untersuchungen diente. Um eine hohe Reproduzierbarkeit zu garantieren, wurde das Verfahren zur Einkapselung durch einen Roboter zum Auftragen durchgeführt. Dessen durch Druck angetriebene Nadel verteilt einen Epoxidklebstoff homogen über die obere Barriereschicht mit einer Fläche von 18 mm x 18 mm. Anschließend wird die untere Barriereschicht oben hinzugefügt und der Epoxidklebstoff wird unter UV-Licht ausgehärtet. Mit einem Profilometer wurde gemessen, dass die Dicke der ausgehärteten Schicht des Klebstoffs etwa 100 μm beträgt.

Für diese Versuche wurde Glas als Barrierematerial benutzt, da das Eindringen von Wasser durch Glas vernachlässigt werden kann, wodurch Diffusion durch den Klebstoff als einziger Weg des Eindringens von Wasser in das Bauteil übrigbleibt. Nichtsdestotrotz funktioniert dieses Verfahren für alle Barrierematerialien, solange sie ausreichend durchlässig für Wellenlängen innerhalb des Absorptionsbands von Wasser sind. Dieses Erfordernis ist nicht wirklich einschränkend, da Wasser mehrere charakteristische Absorptionsbande über einen breiten Spektralbereich zeigt (Fig. 8c). Hier wurde das Kombinationsband von Wasser bei 1.920 nm benutzt, da Glas in diesem Spektralbereich transparent ist. Fig. 8c zeigt die Absorptionsspitzen von Wasser bei 1.430 nm und 1.920 nm als auch das Transmissionsfenster des Glas/Kleber/Glas-Stapels, der bei den Experimenten benutzt wurde. Die gezeigten Spektrallinienmessungen wurden mit einem Breitband-Spektrometer durchgeführt.

Um die Diffusion von Wasser in die Proben auszulösen und um sicherzustellen, dass die Proben kontrolliert Wärme und Feuchtigkeit ausgesetzt wurden, wurden sie in Dampfheizkammern (Klimatestkammern) platziert. Alle Proben wurden gemäß dem Testprotokoll ISOS-D-3 bei 85 °C und 85 % relativer Luftfeuchtigkeit (RH) behandelt. Die Glasflächen der Proben wurden jedes Mal, nachdem sie Feuchtigkeit ausgesetzt waren, mit Ethanol gereinigt.

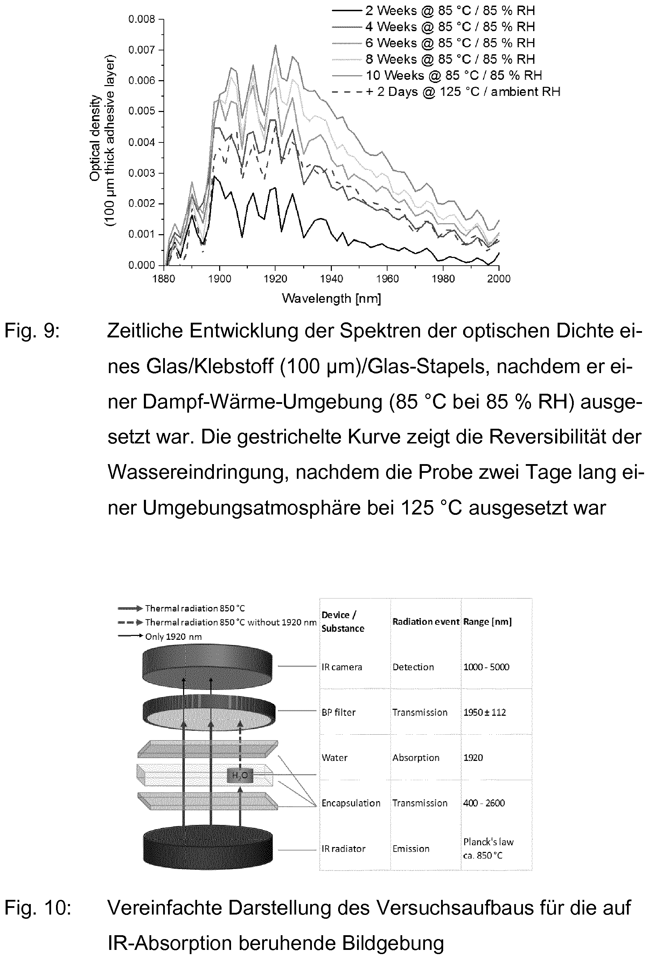

Fig. 9 zeigt, wie das Absorptionsspektrum um 1.920 nm sich im Laufe der Zeit vergrößert, wenn die Probe den oben beschriebenen Dampf-Wärme-Bedingungen ausgesetzt wird. Jedes Spektrum stellt den Durchschnitt von fünf einzelnen Proben da, um das Signal-Rausch-Verhältnis zu vergrößern. Daneben wurde die optische Verschiebung korrigiert, die durch Glaskorrosion und durch Wärme induzierte Degradation des Klebers verursacht wurde. Ferner wurde die optische Dichte berechnet, wobei das ursprüngliche Spektrum zum Zeitpunkt t=0 benutzt wurde. Nachdem die Probe einer Umgebungstemperatur von 125 °C ausgesetzt wurde, verringert sich die Absorption wieder, wodurch bestätigt wird, dass die beobachteten spektralen Veränderungen reversibel sind, wenn man das Spektrum nach 10 Wochen bei 85 °C/85 % RH mit dem Spektrum nach zwei Tagen bei 125 °C/relative Luftfeuchtigkeit der Umgebung in Fig. 9 vergleicht. Dadurch wird bestätigt, dass die wesentliche Änderung der Absorption durch die reversible Aufnahme von Wasser in den Kleber erfolgt, eher als durch nicht irreversible Veränderungen des Glases oder des Klebers selbst.

Zusätzlich wurde die Reversibilität der Wasseraufnahme durch gravimetrische Messungen überprüft. Zu diesem Zweck wurde eine Hochpräzisionswaage benutzt. Zunächst wurde die Sättigungskonzentration von Wasser in dem Klebstofffilm durch Messungen der Erhöhung des Gewichts des Klebstofffilms zu unterschiedlichen Zeiten erfasst, während er den Dampf-Wärme-Umgebungsbedingungen (85 °C/ 85 % RH) ausgesetzt war. Durch Benutzen von Gleichung (1) wird die durchschnittliche Konzentration von Wasser (c) in der Probe zu jedem Zeitpunkt, während die Probe den Umgebungsbedingungen ausgesetzt war, aus der modularen Masse von Wasser (M/(Wasser)), der Dichte des Klebstoffs ($\rho$(adhesive) = 1.4 g/cm$^3$), der Masse des Klebstoffs (m(adhesive)), und der Zunahme der Masse während die Probe Wasser und Dampf ausgesetzt war (*m*(water)), berechnet. Mit zunehmender Zeit, während der die Probe den Bedingungen ausgesetzt war, konvergiert der Wert gegen die Sättigungskonzentration ($c_s$). Diese Experimente zeigten, dass die Sättigungskonzentration $c_s$ von Wasser bei dem untersuchten Klebstoff 0.003 mol/cm$^3$ (relative Standardabweichung $\pm$ 2 %) bei 85 °C / 85 % RH beträgt, entsprechend einer Beladung von 6,3 g/m$^2$ Wasser bei einer 100 $\mu$m dicken Klebstoffschicht. Ein anschließendes Aussetzen der Probe bei trockener Luft bei 125 °C für zwei Tage führte zu dem Verlust des zuvor zugenommenen Gewichts der Probe während sie der Dampf-Wärme-Umgebung ausgesetzt war, wodurch die vollständige Reversibilität der Wasseraufnahme des Systems bestätigt wurde.

$$c = \frac{m(water)/M(water)}{m(adhesive)/\rho(adhesive)} \qquad c\,(t = \infty) = c_s \qquad\qquad (1)$$

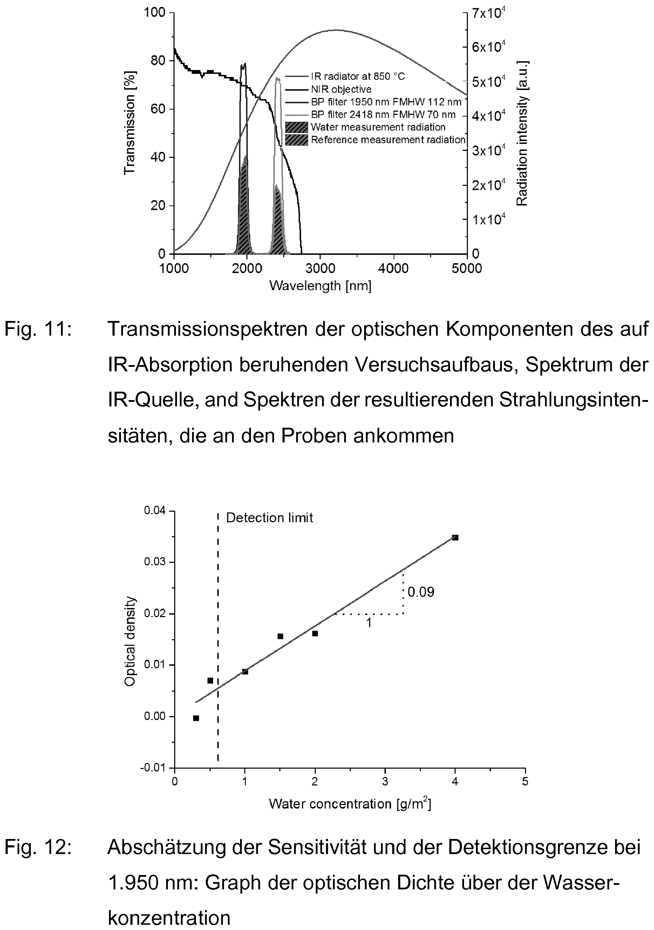

Nachfolgend wird der Versuchsaufbau der IR-Absorptions-Bildgebung im Detail erläutert. Die Skizze in Fig. 10 zeigt die wesentlichen Komponenten und deren Anordnung. Fig. 11 zeigt die Spektren der optischen Komponenten und die resultierenden Wellenlängen der Strahlung. Die Signalkette beginnt mit vier Graukörperstrahlern bei etwa 850 °C, die Wellenlängen in einem weiten Bereich emittieren. Anschließend passiert die Strahlung einen optischen Diffuser und ein Multi-Reflexions-Spiegelrohr, um das Strahlprofil zu homogenisieren, anschließend passiert die Strahlung die Probe. Schließlich passiert die Strahlung ein Nah-IR-Objektiv und einen optischen Bandpassfilter (BP) 1.950 nm und trifft auf einen InSb-Detektor der Kamera für mittlere IR-Strahlung (MIR). Um ein Referenzbild aufzunehmen, wird der Bandpassfilter für 1.950 nm durch einen Filter mit einem Transmissionsbereich außerhalb des Absorptionsbereichs von Wasser ausgetauscht. Dafür wird ein optischer Bandpassfilter bei 2.418 nm benutzt. Um den Dunkelstrom der Kamera zu berücksichtigen, ist es erforderlich, ein Dunkelbild von jeder Aufnahme zu subtrahieren. Dies wird durch Befestigen einer mechanischen Blende zwischen dem Strahler und der Kamera realisiert. Während die Blende geschlossen ist, wird automatisch ein Dunkelbild aufgenommen, sodass das Bild mit dem tatsächlichen Signal (Blende offen) im Hinblick auf den Dunkelstrom korrigiert werden kann.

Die resultierenden Spektren der Strahlung, die an der Probe ankommen (gestrichelte Bereiche in Fig. 11) sind die Ergebnisse aller Komponenten entlang des Strahlengangs. Der Zweck der optischen Bandpassfilter ist, dass lediglich solche Wellenlängen den Detektor erreichen, die innerhalb des Absorptionsbands von Wasser und innerhalb des Spektralbereichs liegen, der für das Referenzsignal ausgewählt worden ist. Das Nahinfrarot-Objektiv (NIR) hilft, unerwünschte Strahlung in dem MIR-Bereich abzuschneiden, in dem die Bandpassfilter eine schlechte Leistung zeigen.

Um das Eindringen von Wasser in die in Fig. 8a gezeigte Probe zu überwachen wurden viele einzelne Rohbilder, die jeweils im Hinblick auf den Dunkelstrom der Kamera wie oben beschrieben korrigiert wurden, aufgenommen, bevor und nachdem die Probe den Dampf-Wärme-Umgebungsbedingungen ausgesetzt wurde. Die Einstellungen zum Aufnehmen jedes Bilds wurden so gewählt, dass 200 Mittelwerte bei einer Bildrate von 100 Bildern pro Sekunde (FPS) aufgenommen wurden, was in einer Aufnahmezeit von 2 Sekunden pro Bild resultierte. Als Integrationszeit des Detektors wurde 1 ms gewählt.

Das erste Bild $I$(1950,$t$) wurde mit dem Bandpassfilter bei 1.950 nm (Transmission in dem Bereich der Wasserabsorption) aufgenommen. Es trägt die Hauptinformation, da bei sich erhöhender Wasserkonzentration in der Probe die Transmission der Probe bei 1.950 nm fällt. Das zweite Bild wurde ohne die Probe aufgenommen, um die Intensitätsverteilung der einfallenden Strahlung bei 1.950 nm zu erhalten. Der Logarithmus des Verhältnisses beider Bilder ergibt das Bild der optischen Dichte (optical density image, ODI) der Probe zum Zeitpunkt t (siehe Gleichung (2)).

$$ODI(1950, t) = lg\frac{I_0(1950,t)}{I(1950,t)} \qquad\qquad (2)$$

Durch Subtrahieren des Bilds der optischen Dichte, das zum Zeitpunkt t=0 aufgenommen wurde, wird die Änderung der optischen Dichte $\Delta ODI(t)$ erfasst, die durch die Aufnahme oder den Verlust von Wasser verursacht worden ist, und durch eine mögliche Degradation des Einkapselungsmaterials ($DOE(t)$) während des entsprechenden Zeitraums (siehe Gleichung (3)).

$$\Delta ODI(1950, t) = lg\frac{I_0(1950,t)\cdot I(1950,t=0)}{I(1950,t)\cdot I_0(1950,t=0)} \qquad\qquad (3)$$

Um eine mögliche Degradation *DOE(t)* zu berücksichtigen, zum Beispiel eine erhöhte Trübung durch Glaskorrosion, sind Messungen mit einem zusätzlichen Bandpassfilter erforderlich, der bei einer unterschiedlichen Wellenlänge (zum Beispiel 2.418 nm) durchlässig ist. Die zeitlichen Änderungen der optischen Dichte bei 2.418 nm ($\Delta ODI(2418,t)$) werden anhand der entsprechenden Rohbilder analog zu denjenigen bei 1.950 nm durch die Gleichung (3) berechnet. Wie durch die Gleichung (4) ausgedrückt wird, wird davon ausgegangen, dass die Änderungen der optischen Dichte bei 1.950 nm und 2.418 nm aus Beiträgen der Änderungen der Wasserkonzentration innerhalb der Einkapselung $\Delta ODI(\lambda, t, water)$ und durch Änderungen aufgrund der optischen Eigenschaften der Einkapselungsmaterialien $DOE(t)$ zusammengesetzt sind. Es wird vorausgesetzt, dass die Änderungen der optischen Eigenschaften der Einkapselungsmaterialien über den untersuchten Spektralbereich (1.950 nm und 2.418 nm) unabhängig von der Wellenlänge sind. Dies ist eine vernünftige Annahme, solange die Änderungen im Wesentlichen in einer erhöhten Trübung des Einkapselungsmaterials bestehen. Das Verhältnis z der $\Delta ODI(\lambda, t, water)$-Werte bei $\lambda=1.950$ nm und $\lambda=2.418$ nm wird durch die entsprechenden integralen Absorptionskoeffizienten von Wasser in den Wellenlängenbereichen, die durch die Bandpassfilter durchgelassen werden, gemäß Gleichung (5) bestimmt.

$$\Delta ODI(1950,t) = \Delta ODI(1950,t,water) + DOE(t) \qquad (4a)$$

$$\Delta ODI(2418,t) = \Delta ODI(2418,t,water) + DOE(t) \qquad (4b)$$

$$z = \frac{\Delta ODI(1950,t,water)}{\Delta ODI(2418,t,water)} = \frac{\alpha(1950,water)}{\alpha(2418,water)} \qquad (5)$$

*DOE(t)* wird bestimmt durch Einsetzen von Gleichung (5) in Gleichung (4b) und Subtrahieren der Gleichung (4b) von der Gleichung (4a) gemäß Gleichung (6).

$$DOE(t) = \frac{\Delta ODI(1950,t) - \Delta ODI(2418,t) \cdot z}{1-z} \qquad (6)$$

Der auf diese Weise erhaltene zeitabhängige Wert *DOE(t)* wird in Gleichung (7) benutzt, um die IR-Absorptionsbilder im Hinblick auf optische Änderungen des eingekapselten Materials zu korrigieren.

$$\Delta ODI_{corr}(1950,t) = \lg \frac{I_0(1950,t) \cdot I(1950,t=0)}{I(1950,t) \cdot I_0(1950,t=0)} - DOE(t) \qquad (7)$$

Aus $\Delta ODI_{corr}(1950, t)$ und dem Absorptionkoeffizient von Wasser (a(1950,water) = 109 cm$^{-1}$ bei 1.950 nm), und der Dichte von Wasser ($\rho(water)$ = 1 g/cm$^3$), wird die Änderung der Konzentration von Wasser in dem Klebstofffilm erhalten (siehe Gleichung (8)). Dieses Verhältnis wird als Verhältnis der Masse des Wassers ($m(water)$) und der Fläche (A) des Klebstofffilms ausgedrückt.

$$\frac{m(water)}{A} = \Delta ODI_{corr}(1950,t) \cdot \frac{\ln(10) \cdot \rho(water)}{\alpha(1950,water)} \qquad (8)$$

Im nächsten Schritt wurde die Sensitivität des Versuchsaufbaus abgeschätzt. Um die Grenze der Detektion festzustellen, war es erforderlich, kleine Wasserkonzentrationen im Bereich von mg/m$^2$ herzustellen. Dies ist möglich durch serielles Verdünnen von Wasser in Aceton. Unterschiedliche Wassermengen zwischen 1,5 mg und 20,0 mg wurden in 50 ml wasserfreiem Aceton (CH$_3$-CO-CH$_3$) gelöst, das vollständig mit Wasser mischbar und überwiegend transparent in dem Bereich um 1.920 nm ist. Die sich daraus ergebenden Mischungen wurden in eine IR-Küvette gegossen und mit dem oben beschriebenen Versuchsaufbau zur Bildgebung der IR-Absorption analysiert. Das Ergebnis dieses Experiments ist in Fig. 12 gezeigt. Die Detektionsgrenze wurde aus der Neigung und der Standardabweichung ($\sigma$) gemäß Gleichung (9) berechnet. Die Detektionsgrenze betrug 0,6 g/m$^2$.

$$Detektiongrenze = \frac{3.3 \cdot \sigma}{Neigung} \qquad (9)$$

Der Vergleich dieser Werte mit der oben bestimmten Sättigungskonzentration von Wasser in dem Klebstoff (6.3 g/m$^2$ bei einem 100 $\mu$m dicken Film des Klebstoffs bei 85 °C und 85 % RH) zeigt, dass das Verfahren ausreichend empfindlich ist, um die Wasseraufnahme einer 100 $\mu$m dicken Schicht des Klebstoffs mit ausreichender Genauigkeit zu überwachen.

Es wird darauf hingewiesen, dass die meisten flexiblen Barriereschichten auf PET (Polyethylenterephthalat) basieren, das bei dem intensivsten IR-Absorptionsband von Wasser bei etwa 2.940 nm ausreichend transparent ist. Der Absorptionskoeffizient dieses Bands beträgt etwa das 70-fache desjenigen des Absorptionsbands bei etwa 1.920 nm (siehe Fig. 8). Dementsprechend ist die Detektionsgrenze des bildgebenden IR-Verfahrens etwa 70 mal geringer als bei 1.950 nm, entsprechend etwa 8,6 mg/m$^2$, unter der Annahme, dass die gleichen Materialeigenschaften und Detektoreigenschaften bei 2.940 nm vorliegen.

Zusätzlich wurden numerische Simulationen der Wassereindringung in die Proben mittels FEM-Simulationen durchgeführt. Alle Eingangsgrößenwurden an das oben beschriebene Experiment zur Bildgebung der IR-Absorption angepasst, um maximale Vergleichbarkeit zu erzielen. Es wurde angenommen, dass der Wasservorrat außerhalb der Probe unendlich war. Es wurde lediglich seitliches Eindringen von Wasser durch den Klebstoff in Betracht gezogen, d. h. Diffusion von unten und oben wurde zu 0 gesetzt, da die Diffusion durch Glas im Zeitverlauf des Experiments vernachlässigbar ist. Die Simulation beruht auf dem Fickschen Diffusionsgesetz.

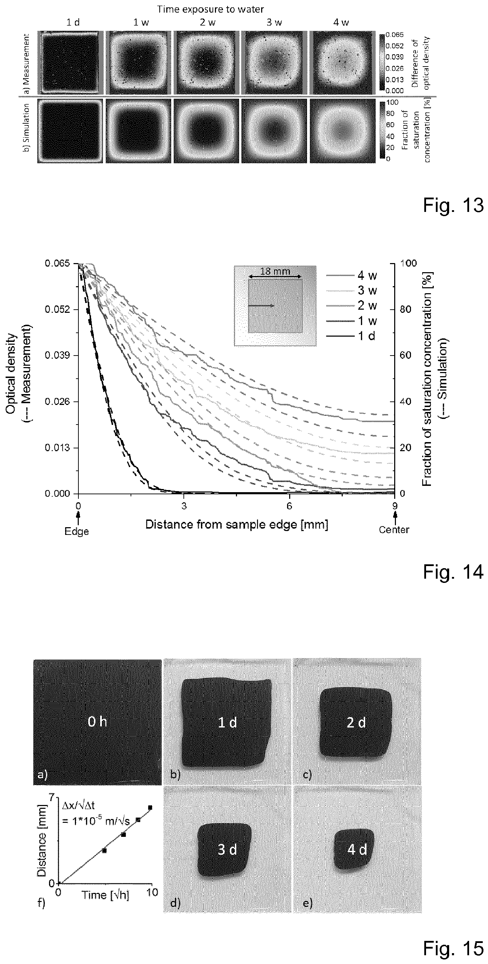

Nachfolgend werden die Ergebnisse der IR-Absorption-Bildgebung mit denjenigen der FEM-Simulation verglichen. Fig. 13 zeigt Bilder der IR-Absorption der Glas/Klebstoff/Glas-Probe, nachdem diese den Dampf-Wärme-Umgebungsbedingungen ausgesetzt wurde. Insbesondere zeigt Fig. 13a (oberer Teil) IR-Absorptionsbilder gegenüber der Expositionszeit, die durch Gleichung (7) erhalten wurden. Im Vergleich dazu ist in Fig. 13b (unterer Teil) die entsprechende Simulation der Wasserdiffusion (Diffusionskoeffizient 5*10$^{-12}$ m$^2$/s) in eine Einkapselung von den Kanten her gezeigt. Die linken und rechten Kanten der IR-Absorptionsbilder sind geringfügig aufgrund des Probenhalters abgeschnitten. Die Flecken innerhalb der Proben sind kleine Luftblasen in dem Klebstoff, die durch geringe räumliche Verschiebungen verdoppelt werden. Die Bilder wurden aus den Rohbildern mittels Gleichung (7) berechnet. Die Degradation nach vier Wochen (DOE(4 weeks)) wurde mittels Gleichung (6) berechnet und korrigiert und betrug etwa 20 % des gesamten Messsignals. Wie für in Glas eingekapselte Proben erwartet war, dringt Wasser durch den Klebstoff an den Kanten der Proben ein und diffundiert zur Mitte hin.

Bereits nach zwei Stunden kann Wasser an den Kanten der Probe detektiert werden. Dickere Proben zeigen dieselbe Diffusionsgeschwindigkeit wie dünnere Proben, jedoch mit einem höheren Kontrast aufgrund einer größeren Änderung der Transmission.

Fig. 13b (der untere Teil von Fig. 13) zeigt die FEM-Simulationen des Eindringens von Wasser in eine Probe mit der in Fig. 8 gezeigten Geometrie. Wählt man als Diffusionskoeffizient $D$ = 5*10$^{-12}$ m$^2$/s, dann sind die simulierten Diffusionsbilder den durch die IR-Absorption erhaltenen Bildern sehr ähnlich.

Ein quantitativer Vergleich von Messung und Simulation wird durch Drucken der Linien der Bilder der IR-Absorption und der Simulationen ermöglicht. In Fig. 14 ist dies für unterschiedliche Zeiträume erfolgt, in denen die Proben Dampf und Hitze ausgesetzt waren. Während die durchgezogenen Linien die Ergebnisse aus den Messungen der IR-Absorption zeigen, stellen die gestrichelten Linien die Simulationen dar. Für Werte des Diffusionskoeffizienten zwischen 5*10$^{-12}$ m$^2$/s (untere Linie) und 6*10$^{-12}$ m$^2$/s (obere Linie) ergibt sich eine zufriedenstellende Übereinstimmung der experimentellen Kurven. Fig. 14 zeigt die Verläufe der optischen Dichte der in Fig. 13 gezeigten Bilder (von der Kante zur Mitte) für unterschiedliche Expositionszeiten. Die durchgezogenen, geglätteten Linien entsprechen den IR-Absorptionsbildern. Die gestrichelten Linien entsprechen den Simulationsergebnissen, wobei die untere Linie dem Diffusionskoeffizienten 5*10$^{-12}$ m$^2$/s und die obere Linie dem Diffusionskoeffizienten 6*10$^{-12}$ m$^2$/s entspricht.

Durch Einsetzen der optischen Dichte $\Delta ODI_{corr}(1950, t)$, die für eine wassergesättigte 100 $\mu$m dicke Klebstoffschicht anhand der Kantenwerte von Fig. 14 erhalten wurde, in Gleichung (8), wird eine Flächenkonzentration von etwa 13,7 g/m$^2$ erhalten. Dies ist höher als der Wert 6,3 g/m$^2$, der durch gravimetrische Messungen erhalten wurde. Berücksichtigt man jedoch Unsicherheiten der experimentellen Parameter beider Experimente und der IR-Absorptionskoeffizienten, dann ist die Abweichung immer noch akzeptabel.

Um das Verfahren zur Bildgebung mittels IR-Absorption weiter zu validieren, wurde es mit den Ergebnissen eines Ca-Tests verglichen. 100 nm Ca wurden auf ein Glassubstrat aufgedampft, bevor es wie oben beschrieben eingekapselt wurde. Anschließend wurden die Ca-Proben denselben Umgebungsbedingungen wie die Proben für die IR-Bildgebungs-Experimente (T=85 °C und 85 % RH) ausgesetzt.

Fig. 15a) bis 15e) zeigt die Oxidation von Ca (schwarz) zu Ca(OH)$_2$ (grau) bei dem optischen Ca-Test, bei dem die Probe vier Tage lang Umgebungsbedingungen von 85 °C und 85 % RH ausgesetzt war. Mit fortschreitender Zeit wandelt das Wasser Ca (schwarz) in Ca(OH)$_2$ (grau) um. Das Fortschreiten der Wasserfront wird als Abstand der intakten Ca-Fläche von der Kante der oberen Glasbarriere gemessen. In Fig. 15 f) zeigt der Graph den Abstand als Funktion der Quadratwurzel der Zeit, nachdem die Probe der Dampf-Wärme-Umgebung ausgesetzt war.

Anhand der Position (x) der Oxidationsfront gegenüber der Zeit, die die Probe den Umweltbedingungen ausgesetzt war, ist es möglich, den Diffusionskoeffizienten (D) von Wasser in dem Klebstoff mit Gleichung (9) zu berechnen.

$$D = \left( \frac{\Delta x / \Delta\sqrt{t}}{2 \cdot erf^{-1}\left(1 - \frac{c_k}{c_s}\right)} \right)^2 \tag{9}$$

$\Delta x/\Delta\sqrt{t}$ bezeichnet dabei die Neigung der entsprechenden Kurve in Fig. 15. Die Konzentration von Wasser in der Klebstoffschicht, die benötigt wird, um die Ca-Schicht zu oxidieren, die auch als kritische Konzentration ($_{Ck}$) bezeichnet wird, wird durch Stöchiometrie der Hydrolyse von Ca, der Dicke des Klebstofffilms und der Dicke des Ca-Films bestimmt mit (d(Ca)=0,1 $\mu$m) und (d(Klebstoff)=100 $\mu$m) durch die Gleichung (10). Dabei bezeichnet p(Ca) die Dichte von Calcium und M(Ca) ist die modulare Masse von Calcium.

$$c_k = \frac{2\,\rho(Ca) \cdot d(Ca)}{d(adhesive) \cdot M(Ca)} = 0.06\,\frac{mol}{cm^3} \cdot \frac{d(Ca)}{d(adhesive)} \tag{10}$$

Setzt man alle relevanten Parameter $\left(\Delta x/\Delta\sqrt{t} = 10^{-5}\ \text{m}/\sqrt{\text{s}}\right.$; $c_s$ = 3*10$^{-3}$ mol/cm$^3$; $c_k$ = 6*10$^{-5}$ mol/cm$^3$) in die Gleichung (9) ein, erhält man als Diffusionskoeffizienten $D_{Ca\text{-}Test}$ (85 °C/85 % RH)=9*10$^{-12}$ m$^2$/s. Dieser Diffusionskoeffizient ist etwa 50 % größer als derjenige, der durch Anpassen der IR-Absorptionsdaten erhalten wurde, was wahrscheinlich an der Unterschätzung der kritischen Konzentration $c_k$ liegt.

Schlussfolgerungen

Es wurde ein zerstörungsfreies Verfahren zur Bildgebung der Wassereindringung in die Einkapselung (opto)elektronischer Bauteile entwickelt. Dieses Verfahren basiert auf der Messung der Transmission der IR-Absorption von eingekapselten Bauteilen, wobei ein schwarzer Strahler verwendet wird, eine für Infrarotstrahlung empfindliche Kamera und mehrere passende Bandpassfilter. Das Potenzial des Verfahrens wurde am Beispiel des seitlichen Eindringens von Wasser in einen geschichteten Glas/Klebstoff/Glas-Stapel gezeigt, wobei das Wasserabsorptionsband bei 1.920 nm benutzt wurde. Durch sorgfältige Korrektur der veränderlichen Hintergrundabsorption, die durch Alterung der Schichtung verursacht wird, wurde eine Detektionsgrenze von 0,6 g Wasser/m$^2$ erhalten. Für Einkapselungsmaterialien, die für Wellenlängen um 2.940 nm durchlässig sind, können Detektionsgrenzen unterhalb 10 mg/m$^2$ erhalten werden, entsprechend der wesentlich stärkeren Absorption der OH-Schwingung (OH stretch vibration). Die auf IR-Absorption basierende Bildgebung für Wasser kann auch auf undurchsichtige Proben mit IR-reflektierenden Rückseitenfolien ausgedehnt werden durch Abändern des Versuchsaufbaus von Transmission zu Reflexion.
Das auf IR-Absorption beruhende bildgebende Verfahren bietet mehrere Vorteile im Vergleich zu traditionellen Verfahren wie der Ca-Test. Es kann an realen Bauteilen durchgeführt werden, ohne dass die Notwendigkeit besteht, diese zu modifizieren oder zu zerstören. Ferner liefert es die absolute Konzentration von Wasser als Funktion von Zeit und Raum und erlaubt somit die quantitative Korrelation der Wassereindringung zur Bauteilschädigung. Daneben ermöglicht das Anpassen der Bilder mit FEM-Simulationen, dass der Diffusionskoeffizient von Wasser erhalten wird. Indem es in dem angepassten Modell ermöglicht wird, dass Wasser nicht nur von der Seite, sondern auch über die Barriereschichten eindringt, können auch quantitative Anpassungen der Wassereinbringung für solche Fälle erhalten werden, bei denen Barrierematerialien mit begrenzter Permeabilität für Wasser eingesetzt werden, wie flexible Barriereschichten. Ein weiterer Vorteil ist, dass diese Technik modifiziert werden kann, um andere Flüssigkeiten als Wasser zu detektieren, beispielsweise organische Lösungsmittel, indem die passenden Wellenlängen zur Detektion gewählt werden.
Die oben beschriebenen Eigenschaften erlauben nicht nur eine qualitative Kontrolle der Einkapselung elektronischer Bauteile, sondern auch die Optimierung von Einkapselungsmaterialien, Verfahren und Geometrie. Dies führt zu einer verlängerten Lebensdauer wasserempfindlicher (opto)elektronischer Bauteile wie organische Leuchtdioden oder Solarzellen und insbesondere von Bauteilen auf organischer Basis und auf der Basis von Perowskiten.
Sämtliche in der Anmeldung beschriebenen Verfahrensschritte können beliebig miteinander kombiniert werden. Einzelne Verfahrensschritte können auch weggelassen werden und/oder es können zusätzliche Verfahrensschritte vorgesehen sein.

Bezugszeichenliste

1 Strahler
2 Verkapselungsprobe
3 Proben körper
4 Deckschicht
5 Deckschicht
6 erster Bandpassfilter
7 Kamera
8 zweiter Bandpassfilter
10 Verkapselungsprobe
11 Schicht
12 Schicht
13 Flüssigkeitsreservoir
14 hygroskopische Schicht
15 Schutzschicht

**Patentansprüche**

**1.** Bildgebendes Verfahren mittels Nahinfrarotspektroskopie zur Flüssigkeitsdetektion in einer Probe, mit den folgenden Schritten:

- Anordnen eines Strahlers in einem Strahlengang, wobei der Strahler (1) als Breitbandstrahler oder als LED oder als Laserstrahler ausgebildet ist,
- wobei in dem Fall, wenn ein Breitbandstrahler als Strahler (1) verwendet wird, ein erster Bandpassfilter (6), der nur für Wellenlängen im Bereich der spektralen Absorption der Flüssigkeit der Probe durchlässig ist, in dem Strahlengang angeordnet wird;
- Durchleuchten oder Bestrahlen der Probe mittels des Strahlers (1) mit Nahinfrarotstrahlung und Erstellen einer ersten Bildaufnahme mittels einer Kamera (7);
- Erstellen einer zweiten Bildaufnahme ohne die Probe;
- gegebenenfalls Entfernen des ersten Bandpassfilters (6);
- wobei in dem Fall, wenn ein Breitbandstrahler als Strahler (1) verwendet wird, ein zweiter Bandpassfilter (8), der nur für Wellenlängen außerhalb des Bereichs der spektralen Absorption der Flüssigkeit der Probe durchlässig ist, in dem Strahlengang angeordnet wird;
- Durchleuchten oder Bestrahlen der Probe mit Nahinfrarotstrahlung und Erstellen einer dritten Bildaufnahme mittels der Kamera (7);
- Erstellen einer vierten Bildaufnahme ohne die Probe;
- pixelweises numerisches Verknüpfen der Bildaufnahmen durch die folgende Beziehung:

$$IM = \frac{\lg(1.\ Bildaufnahme\ /\ 2.\ Bildaufnahme)}{\lg(3.\ Bildaufnahme\ /\ 4.\ Bildaufnahme)},$$

wobei IM eine Bilddarstellung der qualitativen Verteilung der in der Probe enthaltenen Flüssigkeit darstellt.

**2.** Verfahren nach Anspruch 1, **dadurch gekennzeichnet, dass** zusätzlich eine Initialmessung durchgeführt wird, bei der die folgenden Bildaufnahmen erstellt werden:

- eine fünfte Bildaufnahme mit in dem Strahlengang angeordneter Probe, analog zur ersten Bildaufnahme, wobei in dem Fall, wenn ein Breitbandstrahler als Strahler (1) verwendet wird, der erste Bandpassfilter (6), der nur für Wellenlängen im Bereich der spektralen Absorption der Flüssigkeit der Probe durchlässig ist, in dem Strahlengang angeordnet wird;
- eine sechste Bildaufnahme ohne Probe, gegebenenfalls mit dem ersten Bandpassfilter, analog zur zweiten Bildaufnahme;
- eine siebte Bildaufnahme mit dem zweiten Bandpassfilter und in dem Strahlengang angeordneter Probe, analog zur dritten Bildaufnahme;
- eine achte Bildaufnahme mit dem zweiten Bandpassfilter ohne Probe, analog zur vierten Bildaufnahme;
- pixelweises numerisches Verknüpfen der 1. bis 8. Bildaufnahme durch die folgende Beziehung:

$$IM_x = \frac{\lg(5.\ Bildaufnahme\ /\ 6.\ Bildaufnahme)}{\lg(7.\ Bildaufnahme\ /\ 8.\ Bildaufnahme)} - \frac{\lg(1.\ Bildaufnahme\ /\ 2.\ Bildaufnahme)}{\lg(3.\ Bildaufnahme\ /\ 4.\ Bildaufnahme)}$$

wobei $IM_x$ eine Bilddarstellung der Menge der in der Probe enthaltenen Flüssigkeit pro Flächeneinheit ist.

3. Verfahren nach Anspruch 1 oder 2, **dadurch gekennzeichnet, dass** eine Flüssigkeit wie Wasser oder ein organisches Lösungsmittel detektiert wird.

4. Verfahren nach einem der vorangehenden Ansprüche, **dadurch gekennzeichnet, dass** zur Detektion von Wasser ein erster Bandpassfilter (6) verwendet wird, der für Wellenlängen um etwa 2.950 nm oder um etwa 1.900 nm oder um etwa 1.450 nm durchlässig ist.

5. Verfahren nach einem der vorangehenden Ansprüche, **dadurch gekennzeichnet, dass** zur Detektion von Wasser ein zweiter Bandpassfilter (8) verwendet wird, der für Wellenlängen um etwa 2.400 nm durchlässig ist.

6. Verfahren nach einem der vorangehenden Ansprüche, **dadurch gekennzeichnet, dass** der Strahler (1) und die Kamera (7) auf unterschiedlichen Seiten der Probe angeordnet sind und die Probe durchleuchtet wird.

7. Verfahren nach einem der Ansprüche 1 bis 5, **dadurch gekennzeichnet, dass** der Strahler (1) und die Kamera (7) auf derselben Seite der Probe schräg zur Oberfläche der Probe angeordnet werden, derart, dass von der Probe reflektierte Strahlung von der Kamera (7) erfasst wird.

8. Verfahren nach Anspruch 7, **dadurch gekennzeichnet, dass** eine durch die schräge Anordnung der Kamera (7) verursachte Verzerrung der Bildaufnahmen durch ein Bildverarbeitungsverfahren korrigiert wird.

9. Verfahren nach einem der vorangehenden Ansprüche, **dadurch gekennzeichnet, dass** es an einer Verkapselungsprobe (2, 10) durchgeführt wird.

10. Verfahren nach einem der vorangehenden Ansprüche, **dadurch gekennzeichnet, dass** vor jeder Bildaufnahme jeweils ein Dunkelbild erstellt und von der anschließend erstellten Bildaufnahme rechnerisch abgezogen wird.

Fig. 1

Fig. 2

Fig. 3

Fig. 4

1 —————

7

6, 8

11
3       10
12

Fig. 5

t

Fig. 6

Fig. 7

Fig. 8: Einkapselung (hellgrau: Glasplatten; dunkelgrau: Epoxid-harz): a) Draufsicht; b) Seitenansicht; c) Transmissionspek-trum der Einkapselung und Absorptionsspektrum von Was-ser

Fig. 9: Zeitliche Entwicklung der Spektren der optischen Dichte eines Glas/Klebstoff (100 µm)/Glas-Stapels, nachdem er einer Dampf-Wärme-Umgebung (85 °C bei 85 % RH) ausgesetzt war. Die gestrichelte Kurve zeigt die Reversibilität der Wassereindringung, nachdem die Probe zwei Tage lang einer Umgebungsatmosphäre bei 125 °C ausgesetzt war

Fig. 10: Vereinfachte Darstellung des Versuchsaufbaus für die auf IR-Absorption beruhende Bildgebung

Fig. 11:    Transmissionspektren der optischen Komponenten des auf
IR-Absorption beruhenden Versuchsaufbaus, Spektrum der
IR-Quelle, and Spektren der resultierenden Strahlungsintensitäten, die an den Proben ankommen

Fig. 12:    Abschätzung der Sensitivität und der Detektionsgrenze bei
1.950 nm: Graph der optischen Dichte über der Wasserkonzentration

Fig. 13

Fig. 14

Fig. 15

**Europäisches Patentamt**
**European Patent Office**
**Office européen des brevets**

# EUROPÄISCHER RECHERCHENBERICHT

Nummer der Anmeldung

EP 19 15 3008

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 7 840 360 B1 (MICHEELS RONALD H [US] ET AL) 23. November 2010 (2010-11-23) <br> * Spalte 3, Zeile 61 - Spalte 4, Zeile 4 * <br> * Spalte 12, Zeilen 36-42 * <br> * Spalte 13, Zeilen 3-53 * <br> * Spalte 15, Zeilen 41-45 * <br> * Spalte 16, Zeilen 10-14 * <br> * Spalte 17, Zeilen 29-56 * <br> * Spalte 18, Zeilen 34-62 * <br> * Abbildungen 2, 3 * <br> ----- | 1-10 | INV. <br> G01N21/31 <br> G01N21/3554 <br> G01N21/359 |
| A | US 8 988 683 B2 (SEIKO EPSON CORP [JP]; SEIKO EPSON CORPORTION [JP]) 24. März 2015 (2015-03-24) <br> * Spalte 10, Zeilen 41-45 * <br> * Abbildung 6 * <br> ----- | 1-10 | |

**RECHERCHIERTE SACHGEBIETE (IPC)**

G01N

Der vorliegende Recherchenbericht wurde für alle Patentansprüche erstellt

| Recherchenort | Abschlußdatum der Recherche | Prüfer |
|---|---|---|
| München | 14. Mai 2019 | Hoogen, Ricarda |

KATEGORIE DER GENANNTEN DOKUMENTE

X : von besonderer Bedeutung allein betrachtet
Y : von besonderer Bedeutung in Verbindung mit einer
  anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
  nach dem Anmeldedatum veröffentlicht worden ist
D : in der Anmeldung angeführtes Dokument
L : aus anderen Gründen angeführtes Dokument

                                               
& : Mitglied der gleichen Patentfamilie, übereinstimmendes
  Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 19 15 3008

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-05-2019

| Im Recherchenbericht angeführtes Patentdokument | Datum der Veröffentlichung | Mitglied(er) der Patentfamilie | Datum der Veröffentlichung |
|---|---|---|---|
| US 7840360 B1 | 23-11-2010 | US 7840360 B1<br>WO 2008140473 A2 | 23-11-2010<br>20-11-2008 |
| US 8988683 B2 | 24-03-2015 | JP 6142526 B2<br>JP 2014126493 A<br>US 2014185046 A1 | 07-06-2017<br>07-07-2014<br>03-07-2014 |

Für nähere Einzelheiten zu diesem Anhang : siehe Amtsblatt des Europäischen Patentamts, Nr.12/82

EPO FORM P0461